# FASCICULE DE BREVET EUROPEEN

(11) **EP 2 100 654 B1**
(45) Date de publication et mention de la délivrance du brevet: **23.11.2011**
(21) Numéro de dépôt: 09290140.4
(22) Date de dépôt: 27.02.2009
(51) Int. Cl.: B01D 35/30, B01D 35/31, B01D 35/153

(54) **Dispositif de filtrage pour aéronef avec organe de détrompage et d'entraînement de la cartouche**
Filtervorrichtung für Flugzeug mit Sicherungs- und Führungsorgan für den Filtereinsatz
Filter device for aircraft with an element for polarising and inserting the cartridge

(30) Priorité: 14.03.2008 FR 0801407
(43) Date de publication de la demande: 16.09.2009
(73) Titulaire: Messier-Bugatti-Dowty, 78140 Velizy Villacoublay (FR)
(72) Inventeur: Treyz, Alain, 92160 Antony (FR)
(74) Mandataire: Parzy, Benjamin Alain

(56) Documents cités:
- DE-A1- 19 644 646

## Description

L'invention concerne un dispositif de filtrage pour circuit hydraulique d'aéronef avec organe de détrompage et d'entraînement.

### ARRIERE-PLAN DE L'INVENTION

On connaît des dispositif de filtrage pour circuit hydraulique d'aéronef comportant au moins un filtre à cartouche qui est rapporté de façon démontable sur un bloc hydraulique. Le filtre comporte une cuve qui reçoit une cartouche de filtrage. La cuve est vissée sur le bloc hydraulique.

Il arrive parfois que la cuve soit montée sur le bloc hydraulique alors qu'aucune cartouche n'a été disposée dans la cuve. Il arrive également que lorsque l'on démonte le filtre, la cartouche ne vienne pas avec la cuve mais reste accrochée au bloc hydraulique, par exem> ple à cause de la résistance d'un joint d'étanchéité porté par un organe interne du bloc avec lequel la cartouche coopère en service. Le document DE 196 44 646 A1 divulgue un dispositif de filtrage comprenant un bloc hydraulique et un filtre amovile reçu par ledit bloc hydraulique, ledit dispositif comportant également un détrompeur.

### OBJET DE L'INVENTION

L'invention a pour objet un dispositif de filtrage conçu pour éviter ces deux inconvénients.

### BREVE DESCRIPTION DE L'INVENTION

Selon l'invention, on propose un dispositif de filtrage pour aéronef comprenant un bloc hydraulique adapté à recevoir un filtre amovible qui comporte une cuve recevant une cartouche, dans lequel la cuve est équipée intérieurement d'une épingle en matériau élastiquement déformable comportant d'une part un détrompeur qui s'étend vers l'ouverture de la cuve et qui comporte une extrémité recourbée qui dépasse d'une bord de la cuve, et d'autre part un doigt qui s'étend vers le fond de la cuve en étant orienté vers le centre de celle-ci, de façon que, lorsqu'une cartouche est mise en place dans la cuve, le doigt est repoussé par la cartouche et force le détrompeur à se rétracter de sorte que son extrémité recourbée ne déborde plus radialement de la cuve, la cartouche étant équipée d'un obstacle externe qui coopère avec une extrémité du doigt pour empêcher le retrait de la cartouche de la cuve.

Ainsi, le doigt de l'épingle a pour fonction d'entraîner le détrompeur pour qu'il se rétracte lorsqu'une cartouche est mise en place dans la cuve, mais également de retenir la cartouche dans la cuve. Ainsi, avec un simple organe élastique, de préférence réalisé en acier à ressort, on résout les deux problèmes mentionnés.

Avantageusement, l'épingle comporte une ceinture destinée à être engagée élastiquement dans une gorge annulaire intérieure de la cuve, le détrompeur et le doigt s'étendant de part et d'autre de la ceinture.

### BREVE DESCRIPTION DES DESSINS

L'invention sera mieux comprise à la lumière de la description qui suit en référence aux figures des dessins annexés parmi lesquelles :
- la figure 1 est une vue en coupe longitudinale d'une cuve de filtre d'un dispositif de filtrage selon un mode particulier de réalisation de l'invention ;
- la figure 2 est une vue analogue à celle de la figure 1, montrant la cuve de la figure 1 dans laquelle une cartouche a été introduite ;
- la figure 3 est une vue en coupe longitudinale du dispositif de filtrage dans lequel la cuve du filtre est présentée en regard du bloc hydraulique alors que la cuve ne contient aucune cartouche ;
- la figure 4 est une vue en coupe du dispositif de filtrage selon l'invention avec le filtre de la figure 3 en place sur le bloc hydraulique ;
- la figure 5 est une vue en coupe selon la ligne V-V de la figure 4 ;
- la figure 6 est une vue en coupe selon la ligne VI-VI de la figure 4 ;
- la figure 7 est une vue en perspective d'une épingle équipant la cuve de la figure 1.

### DESCRIPTION DETAILLEE DE L'INVENTION

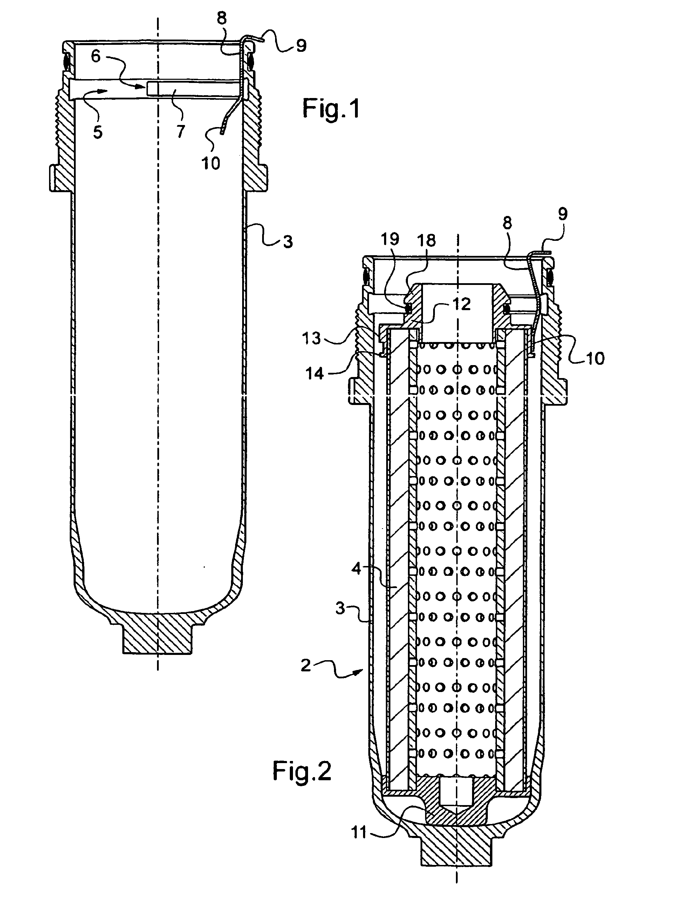

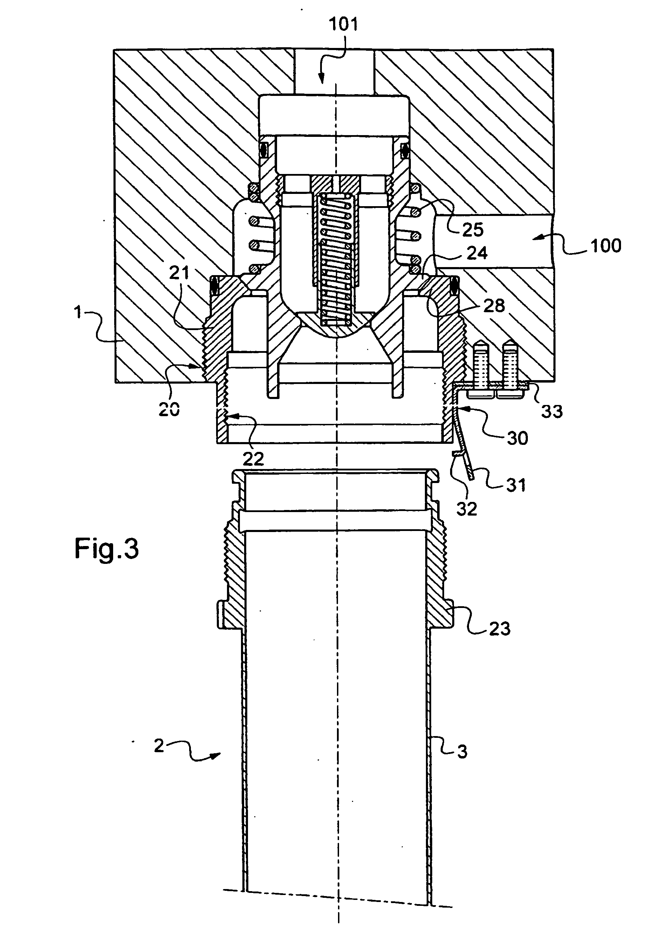

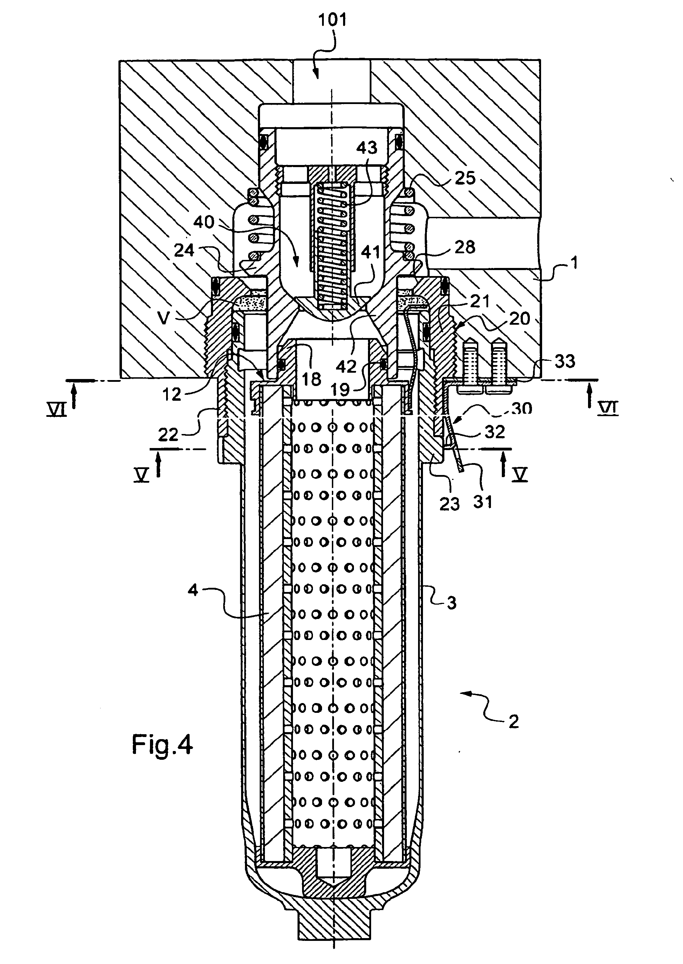

Selon l'invention, et en référence aux figures 1 et 2, le dispositif de filtrage pour circuit hydraulique d'aéronef comporte un filtre 2 comportant une cuve 3 qui reçoit une cartouche de filtrage 4. Le filtre 2 est destiné à être rapportée sur un bloc hydraulique 1 visible aux figures 3 et 4, et réalisé ici en titane.

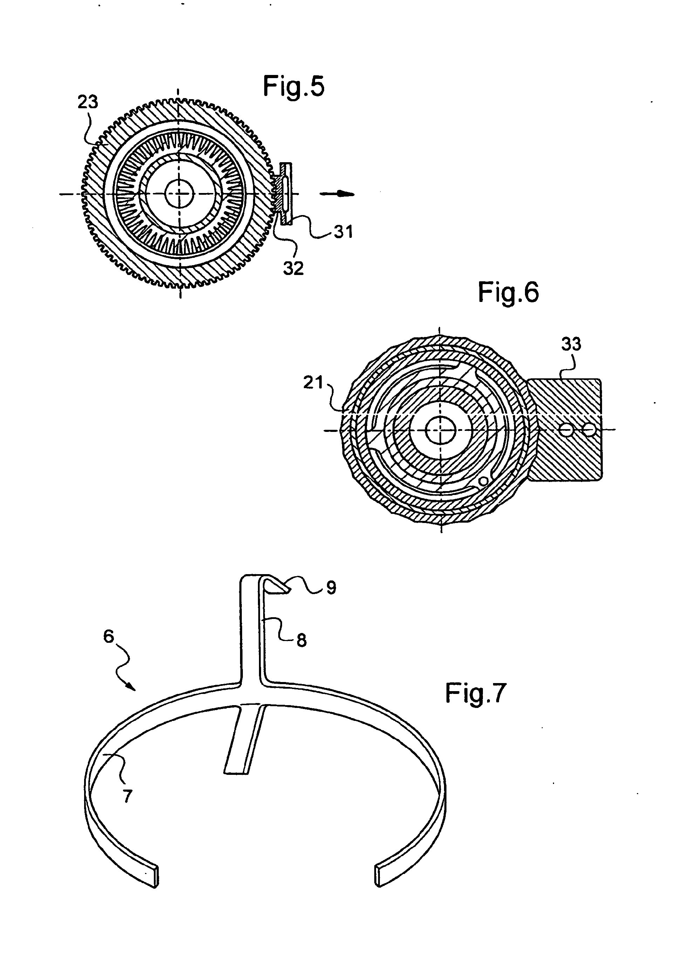

La cuve 3 comporte une gorge annulaire interne 5 dans laquelle est inséré une épingle 6, plus particulièrement visible à la figure 7. L'épingle 6 est réalisée ici en acier à ressort, et comprend une ceinture 7 engagée élastiquement dans une gorge annulaire intérieure 5 de la cuve 3. Un détrompeur 8 avec une extrémité recourbée 9 s'étend depuis la ceinture 7 vers le haut de sorte que lorsque l'épingle 6 est en position sur la cuve, l'extrémité recourbée 9 passe par-dessus le rebord de la cuve 3 et dépasse radialement de celui-ci, comme cela est visible à la figure 1. Par ailleurs, un doigt 10 s'étend de la ceinture vers le fond de la cuve en étant recourbé vers le centre de la cuve 3.

Revenant aux figures 1 et 2, la cartouche 4 comporte un pied 11 qui centre la cartouche 4 dans la cuve 3, ainsi qu'un chapeau 12 creux comportant une jupe 13 qui coiffe l'extérieur de la cartouche, et qui se termine par un redan 14. Lorsque l'on met en place la cartouche 4 dans la cuve 3, le doigt 10 de l'épingle 6 est repoussé vers la paroi de la cuve 3, ce qui a pour effet de tordre localement la ceinture 7, ce qui provoque la rétraction de l'extrémité recourbée 9 du détrompeur 8 de sorte que l'extrémité recourbée 9 ne dépasse plus radialement du rebord de la cuve 3, comme cela est bien visible à la figure 2.

L'épingle 6 joue donc un double rôle :
- elle empêche le montage du filtre 2 sur le bloc hydraulique 1 si une cartouche n'a pas préalablement été mise en place dans la cuve 3. Dans cette situation illustrée à la figure 3, l'extrémité recourbée 9 empêche tout vissage de la cuve 3 sur le bloc hydraulique 1 ;
- elle retient la cartouche 4 dans la cuve 3 lors du démontage de celle-ci, par coopération de l'extrémité du doigt 10 avec le redan 14 du chapeau 12 qui forme un obstacle venant buter contre l'extrémité du doigt 10, ce qui lors du démontage du filtre, oblige la cartouche 4 à venir avec la cuve 3. Pour retirer la cartouche 4 de la cuve 3 lorsque le filtre 2 est démonté du bloc hydraulique 1, il convient de retirer l'épingle 6, ou à tout le moins d'écarter le doigt 10 du redan 14.

Selon un aspect particulier de l'invention, et en référence aux figures 3 et 4, le bloc hydraulique 1 comporte un taraudage 20 dans lequel un insert 21 réalisé ici en acier inoxydable est vissé et serré avec un couple de serrage suffisamment important pour assurer la tenue mécanique en service des filets. L'insert 21 n'est normalement pas démonté en service, de sorte que le taraudage 20 ne subit pas de cyclage de fatigue de vissage/dévissage.

Pour assurer ce vissage, une languette 33 est vissée sur le bloc hydraulique 1 en regard d'une surface périphérique de l'insert 21 qui est crantée. Comme cela est particulièrement visible à la figure 6, la languette 33 coopère avec la surface périphérique crantée de l'insert 21 pour empêcher tout dévissage de ce dernier.

La cuve 3 est elle vissée non pas sur le bloc hydraulique 1, mais dans un taraudage 22 de l'insert 21. Ici, la cuve 3 est vissée jusqu'à contact d'un épaulement 23 de la cuve 3 contre l'insert 21.

Revenant à la figure 3, on observe qu'une lame ressort 30 est vissée sur le bloc hydraulique (ici au moyen des mêmes vis qui tiennent la languette 33) pour présenter, sur une partie en porte à faux 31, une patte dentée 32 qui s'étend vers l'épaulement 23 de façon à coopérer avec des dents périphériques de ce dernier. Lorsque le filtre est en position sur le bloc hydraulique 1, Comme cela est illustré à la figure 5, l'interpénétration des dents de l'épaulement 23 et des dents de la patte dentée 32 assure un arrêt en rotation de la cuve 3 vis-à-vis du bloc hydraulique 1. Cette interpénétration est illustrée à la figure 5. La lame ressort 30 est suffisamment rigide pour qu'en service, les vibrations diverses et les chocs ne puissent provoquer la désolidarisation de la patte dentée 32 et de l'épaulement 23, de sorte que la cuve ne peut se dévisser de l'insert 21. Il suffira d'écarter élastiquement la patte dentée 32 de l'épaulement 23, comme illustré par la fléche sur la figure 5, pour permettre le vissage ou le dévissage de la cuve 3.

En variante, les dents de la patte dentée 32 pourront présenter une forme propre à permettre l'écartement de la patte dentée lors de la rotation de la cuve au cours d'un dévissage de celle-ci.

Ainsi, il est inutile de serrer fortement la cuve 3 dans le taraudage de l'insert 21, puisque la cuve ne peut se dévisser en service. Le taraudage 22 qui reçoit la cuve 3 est donc certes soumis à des vissages et dévissages fréquents, mais sans serrage, de sorte que ces vissages/dévissages ne risquent pas de dégrader le taraudage 22 en fatigue.

Ainsi, le taraudage 20 du bloc hydraulique 1, réalisé dans du titane, est soumis à un effort important, mais ne subit aucun vissage/dévissage, et ne risque donc pas de s'abîmer s'il est bien dimensionné. Quant au taraudage 22 réalisé dans l'insert 21, il subit certes des vissages/dévissages, mais sans effort de serrage significatif, de sorte qu'il ne risque pas non plus de se détériorer. La réalisation de l'insert dans de l'acier inoxydable permet de proposer un taraudage peu sensible à l'usure due aux vissages/dévissages.

Selon une disposition particulière, l'insert 21 forme un siège 28 pour un clapet 24 qui est mobile axialement dans le bloc hydraulique 1. Comme cela est visible à la figure 3, lorsque le filtre n'est pas en place sur le bloc hydraulique 1, le clapet 24 coopère avec le siège 28 pour fermer une communication entre un premier port 100 du bloc hydraulique 1 et l'intérieur de l'insert 21. Par contre, lorsque le filtre est en place, comme illustré à la figure 4, l'extrémité basse du clapet 24 vient coiffer un têton 18 du chapeau 12 de la cartouche 4 et est repoussé à l'encontre d'un ressort 25 par le chapeau 12 pour ouvrir un passage entre le port 100 et l'extérieur de la cartouche 4. On remarquera qu'un joint d'étanchéité 19 s'étend entre le têton 18 et le clapet 24, qui a tendance, lors du démontage du filtre, à retenir la cartouche sur le clapet 24. Le doigt 10 de l'épingle 6 a précisément pour fonction de lutter contre cette retenue et forcer la cartouche à venir avec la cuve lors du dévissage de celle-ci.

Sur cette même figure, on constate que le clapet 24 est creux et forme un canal vers un deuxième port 101 du bloc hydraulique 1 mettant en communication l'intérieur de la cartouche 4 et le deuxième port 101. Le fluide hydraulique circule ainsi du premier port 100 vers le second port 101 en ayant passé au travers de la cartouche 4. Pour éviter tout retour de fluide vers le premier port 100, le clapet 24 est équipé intérieurement d'un organe anti-retour 40 comportant un clapet anti-retour 41 poussé par un ressort 43 vers un siège 42 réalisé dans le creux du clapet 24. Le clapet anti-retour 41 est repoussé par le fluide provenant de l'intérieur de la cartouche à l'encontre du ressort 43.

On remarquera que lorsque le filtre 2 est en place sur le bloc hydraulique 1, un volume mort V de fluide (repéré par des points sur la figure 4) s'étend entre l'extrémité haute de la cuve 3 et le siège 28 de l'insert 21.

Lorsque l'on retire le filtre 2 du bloc hydraulique 1, tout le fluide hydraulique contenu dans la cuve vient avec le filtre 2, tandis que tout le fluide contenu dans le bloc hydraulique 1 au dessus du siège 28 reste dans le bloc hydraulique en étant retenu par le clapet 24 qui se ferme. Cependant, le fluide contenu dans le volume mort V, s'étendant entre le siège 28 et l'extrémité haute de la cuve 3 n'est ni contenu dans la cuve 3 ni retenu par le clapet 24.

Pour éviter que le volume mort V ne se déverse vers l'extérieur lors du démontage du filtre, le volume occupé par le clapet 24 dans la cuve 3 lorsque le filtre 2 est en place sur le bloc hydraulique 1 est prévu pour être plus important que le volume mort V. De cette façon, lors du dévissage de la cuve 3, le fluide contenu dans le volume mort V prend progressivement place dans la cuve 3 au fur et à mesure que le clapet 24 sort de la cuve 3 et libère ainsi dans la cuve 3 du volume disponible pour recevoir ce fluide. En s'assurant que le volume libéré est plus grand que le volume mort V, on évite tout déversement de fluide vers l'extérieur lors du démontage du filtre 2, mis à part quelques gouttes.

L'invention n'est pas limitée à ce qui vient d'être décrit, mais bien au contraire englobe toute variante entrant dans le cadre défini par les revendications.

En particulier, bien que l'on ait décrit l'épingle comme comportant une ceinture engagée dans une gorge annulaire interne de la cuve, on pourra prévoir tout mode de fixation de l'épingle à l'intérieur de la cuve, comme par exemple un vissage ou une soudure.

## Revendications

1. Dispositif de filtrage pour aéronef comprenant un bloc hydraulique recevant un filtre (2) amovible qui comporte une cuve (3) recevant une cartouche (4), **caractérisé en ce que** la cuve est équipée intérieurement d'une épingle (6) en matériau élastiquement déformable comportant d'une part un détrompeur (8) qui s'étend vers l'ouverture de la cuve et qui comporte une extrémité recourbée (9) qui dépasse d'un bord de la cuve, et d'autre part un doigt (10) qui s'étend vers le fond de la cuve en étant orienté vers le centre de celle-ci, de façon que, lorsqu'une cartouche est mise en place dans la cuve, le doigt est repoussé par la cartouche et force le détrompeur à se rétracter de sorte que son extrémité recourbée ne déborde plus radialement de la cuve, la cartouche étant équipée d'un obstacle externe (14) qui coopère avec une extrémité du doigt pour empêcher le retrait de la cartouche de la cuve.

2. Dispositif de filtrage selon la revendication 1, dans lequel l'épingle comporte une ceinture (7) engagée dans une gorge annulaire intérieure de la cuve (3), le détrompeur (8) et le doigt (10) s'étendant de part et d'autre de la ceinture.

3. Dispositif de filtrage selon la revendication 1, dans lequel l'obstacle externe de la cartouche est constitué par un redan (14) s'étendant à l'extrémité d'une jupe (13) d'un chapeau (12) coiffant la cartouche (4).

## Claims

1. An aircraft filter device comprising a hydraulic block adapted to receive removably a filter (2) comprising a vessel (3) receiving a cartridge (4), the filter device being **characterized in that** the vessel is fitted internally with a pin (6) of elastically deformable material comprising firstly a key (8) that extends towards the opening of the vessel and that includes a curved end (9) that projects beyond an edge of the vessel, and secondly a finger (10) that extends towards the bottom of the vessel, and that is oriented towards the center thereof, so that when a cartridge is put into place in the vessel, the finger is pushed back by the cartridge and forces the key to retract so that its curved end no longer projects radially from the vessel, the cartridge being fitted with an external obstacle (14) that co-operates with one end of the finger in order to prevent the cartridge being withdrawn from the vessel.

2. A filter device according to claim 1, wherein the pin comprises a belt (7) engaged in an annular groove inside the vessel (3), the key (8) and the finger (10) extending from opposite sides of the belt.

3. A filter device according to claim 1, wherein the external obstacle of the cartridge is constituted by a step (14) extending at the end of a skirt (13) of a cap (12) fitted overlying the cartridge (4).

## Patentansprüche

1. Filtervorrichtung für ein Flugzeug, umfassend einen Hydraulikblock, der einen abnehmbaren Filter (2) aufnimmt, der einen eine Kartusche (4) aufnehmenden Behälter (3) umfasst, **dadurch gekennzeichnet, dass** der Behälter innen mit einem Bügel (6) aus einem elastisch verformbaren Material versehen ist, der einerseits ein Unverwechselbarkeitselement (8) umfasst, das sich in Richtung der Öffnung des Behälters erstreckt und ein gebogenes Ende (9) hat, das über einen Rand des Behälters hinausragt, und andererseits einen Finger (10), der sich zum Boden des Behälters erstreckt, indem er zu dessen Mitte gerichtet ist, derart, dass, wenn eine Kartusche in den Behälter eingesetzt wird, der Finger durch die Kartusche weggedrückt wird und das Unverwechselbarkeitselement dazu zwingt, sich derart zurückzuziehen, dass sein gebogenes Ende nicht mehr radial über den Rand des Behälters hinausragt, wobei die Kartusche mit einer äußeren Sperre (14) versehen ist, die mit einem Ende des Fingers zusammenwirkt, um das Herausziehen der Kartusche aus dem Behälter zu verhindern.

2. Filtervorrichtung nach Anspruch 1, wobei der Bügel einen Ringabschnitt (7) umfasst, der mit einer inneren ringförmigen Nut des Behälters (3) in Eingriff steht, wobei sich das Unverwechselbarkeitselement (8) und der Finger (10) zu beiden Seiten des Ringabschnittes erstrecken.

3. Filtervorrichtung nach Anspruch 1, wobei die äußere Sperre der Kartusche aus einem Vorsprung (14) gebildet ist, der sich am Ende einer Schürze (13) einer Abdeckung (12) erstreckt, die die Kartusche (4) abdeckt.
